# EUROPEAN PATENT SPECIFICATION

(11) **EP 2 517 920 B1**
(45) Date of publication and mention of the grant of the patent: **11.12.2013**
(21) Application number: 11164331.8
(22) Date of filing: 29.04.2011
(51) Int. Cl.: B60L 3/00, B60L 7/06, B60L 7/26, B60L 9/22

(54) **An electric safety braking device**
Elektrische Sicherheitsbremsvorrichtung
Dispositif électrique de freinage de sécurité

(43) Date of publication of application: 31.10.2012
(73) Proprietor: Bombardier Transportation GmbH, 10785 Berlin (DE)
(72) Inventor: Christensson, Åke, SE-724 63, Västeras (SE)
(74) Representative: Olsson, Jan

(56) References cited:
- EP-A2- 1 195 286
- EP-A2- 2 033 834
- DE-A1- 19 537 526

## Description

### TECHNICAL FIELD OF THE INVENTION AND BACKGROUND ART

The present invention relates to an electric safety braking device for an electric track-bound vehicle comprising
- an electric permanent magnet machine configured to be connected to an electric power source through a converter configured to control said machine by Pulse Width Modulation for propulsion of the vehicle by power transmission to wheels thereof, and
- a resistive braking torque production assembly comprising a connection of electric terminals of the electric machine including at least one dissipative resistor.

An electric safety braking device means in this context an electric device configured to ensure braking of a track-bound vehicle in an extremely reliable manner by being able to carry out emergency braking. Such emergency braking is different from normal service braking of such an electric track-bound vehicle, which may be accomplished by a purely electric brake, a purely mechanical brake or a combination of an electric and a mechanical brake. This carries out all the normal stopping and deceleration operations of the track-bound vehicle as well as the braking operations for holding on declines. However, it is not secure in the sense that it involves a large number of electric, electronic, mechanical, pneumatic or hydraulic components which may malfunction. Such a malfunction of the service brake or an external emergency situation will result in an emergency condition to be dealt with by an emergency or safety braking device. The probability of a failure of a safety braking device has to be extremely low which means that it may not involve all the equipment normally used for obtaining electric braking of the vehicle, which normally is obtained by controlling current valves associated with said converter to conduct a current from the electric machine then operating as a generator mainly through rectifying diodes of the converter and into one or more dissipative resistors or into an electric power supply line to which the vehicle is connected. This means that such safety braking devices are mostly purely mechanical, which requires the mechanical brake of such an electric track-bound vehicle to be sized accordingly resulting in considerable costs, in particular life time cost thereof, especially due to the maintenance required for such brakes and the considerable mass thereof resulting in a noticeable extra energy consumption, not to speak about pollutions by particles from brake pads of such mechanical brakes.

Thus, the benefits of replacing such a mechanical safety braking device by an electric safety braking device are important.

An electric safety braking device of the type defined in the introduction has therefor been proposed and is known through for instance US 2009/0224705 A1. It is based on the fact that an electric machine with permanent magnets requires nothing to provide magnetic flux and therefor provide a resistive torque as soon as it rotates, if it is loaded by current. This known electric safety braking device is not dependent upon the function of said converter, since it comprises an electromechanical commutator connecting the electric terminals of the machine to the braking torque production device for conducting current from the terminals into at least one dissipative resistor. Besides the fact that this electric safety braking device requires an electromechanical commutator it offers no or a low degree of controllability of a safety braking process.

EP 2033834 discloses an electric safety braking device for a rail vehicle comprising a permanent magnet machine and a resistive braking torque production assembly.

### SUMMARY OF THE INVENTION

The object of the present invention is to provide an electric safety braking device of the type defined in the introduction being improved in at least some aspect with respect to such devices already known.

This object is according to the invention obtained by providing such a device which further is characterized by having the features of the characterizing part of appended claim 1.

The presence of such a control unit and said means enables an electric safety operation resulting in a controlled braking also under emergency conditions, since said resistance of said connection and by that the intensity of the current from the electric machine may be varied. The combination of the two switches makes it possible to vary said resistance from infiniteness to theoretical zero by controlling said switches, in which the step-down switch may be used to control said resistance from infiniteness to the resistance of said at least one dissipative resistor, and the step-up switch may be used to vary the resistance from the resistance of said at least one dissipative resistor down to theoretical zero. This means that a controlled braking action may be obtained in emergency conditions without any need of a mechanical brake with large dimensions therefor. Furthermore, by the fact that said means are controllable to vary the resistance of the connection down to a theoretical zero the intensity of said current may be kept at a desired level also when the speed of the track-bound vehicle has decreased to a rather low level for ensuring considerable braking also at this speed and down to a very low speed, so that only a small mechanical brake is required for stopping the vehicle and holding the vehicle in a parking position. "Theoretical zero" means that the resistance is neglectable with respect to the resistance of said at least one dissipative resistor, such as in any case less than 1% thereof, but it may of course not be zero, since said connection will have a resistance, not at least caused by said diodes and possibly other semiconductor devices therein even if those are in a turned-on state.

According to an embodiment of the invention the device comprises an electric power source comprising at least one electric battery configured to provide said control unit of the device with electric power. This means that the electric safety braking device may operate totally independently of disturbances of any electric power supply to the vehicle and/or any malfunction of any equipment, especially electric or electronic equipment of the vehicle.

According to another embodiment of the invention the device comprises a member configured to measure the direct voltage of a direct voltage intermediate link of a said converter and send information thereabout to said control unit, and said control unit is configured to control said means to vary said resistance to obtain a substantially constant intensity of said current and by that of said braking torque during braking of the vehicle through the device. This means that a powerful substantially constant braking action may be obtained as of the occurrence of a condition requiring safety braking and down to a very low speed of the vehicle, which may then also be reached in a short period of time. This may be compared with the case of a constant said resistance as of a certain speed, which would then result in a braking torque decreasing substantially with the speed.

According to another embodiment of the invention the device comprises a member configured to measure the intensity of said current and send information thereabout to said control unit, and the control unit is configured to control said means to vary said resistance to obtain a substantially constant intensity of said current and by that of said braking torque during braking of the vehicle through the device. This is another favourable option of realising efficient braking through the electric safety braking device of the invention.

>

According to another embodiment of the invention said step-down and said step-up switches do each comprise at least one current valve having a semiconductor device of turn-off type, and said control unit is configured to control said semiconductor devices for varying said resistance of said connection. This constitutes a reliable way of realising said means configured to vary the resistance of said connection, and said semiconductor devices may for instance be IGBT:s (Insulated Gate Bipolar Transistor).

According to another embodiment of the invention said control unit is configured to start a safety braking action by alternatively turning said semiconductor device of the step-down switch on over an increasing part of the time while keeping the semiconductor device of the step-up switch turned off for varying said resistance from infiniteness to be the same as the resistance of said at least one dissipative resistor, and according to another embodiment of the invention said control unit is configured to, during a safety braking action, start to turn the semiconductor device of said step-up switch on as of an instant at which the semiconductor device of said step-down switch is continuously turned-on and to keep this semiconductor device turned on over an increasing part of the time for decreasing said resistance and conducting an increasing part of said current therethrough while increasingly bypassing said at least one dissipative resistor.

According to another embodiment of the invention the device comprises a further resistor connected in parallel with said step-up switch and to the connection between the step-down switch and the step-up switch. Such a further resistor has the advantage of reducing the desired size of an inductor that may be arranged between the step-down and step-up switches to reduce peak currents emanating from the control of the semiconductor device of the step-down switch and to act as current injector for stepping up the voltage across said at least dissipative resistor.

According to another embodiment of the invention the device comprises a separate capacitor connectable to each electric terminal of said electric machine by a switching member and said control unit is configured to control the switching members to be open as long as said converter and by that the electric machine is connected to an electric power source and the switching member to close when the electric power supplied to the converter is interrupted and safety braking is to be carried out for increasing the braking torque obtained. Accordingly, such capacitors may be used for increasing the braking torque when carrying out safety braking through the electric safety braking device.

According to another embodiment of the invention the device is configured to be applied to an electric permanent magnet machine having an electric braking device having current valves controlled through a converter control unit to conduct current to at least one additional dissipative resistor for electric braking of the vehicle when said machine and converter are connected to an electric power supply, and said control unit is configured to occasionally during short period of times, such as in the order of 10 - 500 µs, control said means to decrease said resistance for checking the functionality of said means of the electric safety braking device. This means in the case of such means comprising a step-down switch and a step-up switch checking of the functionality of these switches.

The invention also relates to a track-bound vehicle arrangement comprising an electric safety braking device according to the present invention as well as a track-bound vehicle having an electric safety braking device according to the present invention. The advantages of such a driving arrangement and vehicle with respect to reduction of costs, weight and negative influence upon the environment when carrying out braking appear clearly from the above disclosure of different embodiments of an electric safety braking device according to the present invention.

A track-bound vehicle has according to an embodiment of the invention a separate said electric safety braking device for each wheel axle thereof. This will ensure efficient safety braking for a vehicle having all the wheel axles driven.

Further advantages as well as advantageous features of the invention will appear from the following description.

### BRIEF DESCRIPTION OF THE DRAWINGS

With reference to the appended drawings, below follows a specific description of an electric safety braking device according to an embodiment of the invention cited as an example.

In the drawings:
- Fig 1: is a simplified circuit diagram illustrating an electric safety braking device according to an embodiment of the invention,
- Fig 2: is a graph illustrating the duty cycle of a step-down and a step-up switch of an electric safety braking device according to Fig 1 when carrying out safety braking therethrough, and
- Fig 3: is a graph illustrating the current in said connection of the device according to Fig 1 and the direct voltage of a direct voltage intermediate link of said converter versus the number of revolutions of an electric permanent magnet machine when carrying out braking by the electric safety braking device shown in Fig 1.

### DETAILED DESCRIPTION OF AN EMBODIMENT OF THE INVENTION

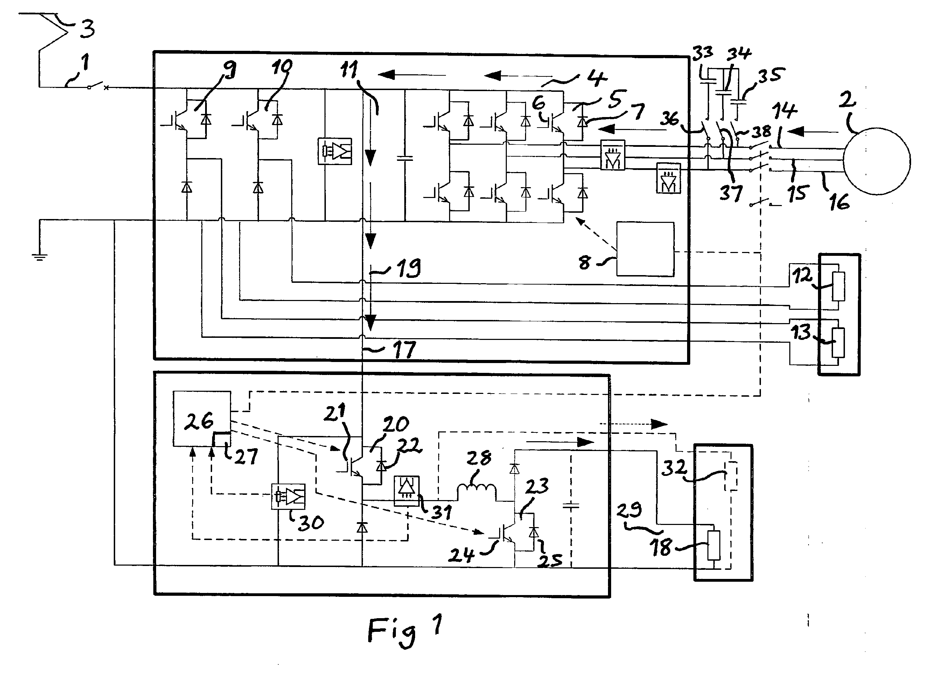

An application of an electric safety braking device according to an embodiment of the present invention to a track-bound vehicle 1 is schematically illustrated in Fig 1. It is shown how the vehicle has an electric permanent magnet machine 2 configured to be connected to an electric power source 3, here in the form of a DC line, through a converter 4 having current valves 5 of at least one semiconductor device 6 of turn-off type, here an IGBT, connected in anti-parallel with a rectifying diode 7. The converter is configured to control the electric machine 2 by Pulse Width Modulation for propulsion of the vehicle by power transmission to wheels thereof. The current valves 5 of the converter 4 are controlled by a converter control unit 8. This converter control unit 8 is configured to also control further current valves 9, 10 connected to a direct voltage intermediate link 11 of the converter 4 for obtaining electric service braking of the vehicle. The current valves 9, 10 are for that sake connected to additional dissipative brake resistors 12, 13. When electric service braking is to take place the current valves 5 of the converter are controlled so that an electric current generated through the rotation of the machine 2 will flow from the terminals 14-16 thereof through the diodes 7 of the converter and either through the current valves 9, 10 to the additional brake resistors 12, 13 or into the DC line 3 when this is possible, i.e. no other vehicle is close to the electric track-bound vehicle in question.

The electric safety braking device according to the present invention will now be described, and this is used for safety braking, i.e. braking when braking may not be carried out through the normal electric braking device described above, which may for instance be the case when the electric power supply to the converter and/or the converter control unit is interrupted. The electric safety braking device comprises a resistive braking torque production assembly comprising a connection 17 of the electric terminals 14-16 of the electric machine 2 through the rectifying diodes 7 of the converter 4 including at least one dissipative resistor 18. The safety braking device comprises means configured to vary the resistance of the connection 17 and comprises a series connection, as seen in a path of said current (arrows 19) from said machine and said converter, of first a step-down switch 20 in the form of a current valve having a semiconductor device 21 of turn-off type, such as an IGBT, and a rectifying diode 22 connected in anti-parallel therewith and then a step-up switch 23 in the form of a current valve having a semiconductor device 24 of turn-off type, such as an IGBT, and a rectifying diode 25 connected in anti-parallel therewith. A control unit 26 operable independently of the existence of the supply of electric power to said converter 4 and the converter control unit 8 by being connected to an electric power source comprising at least one electric battery 27, is configured to control the semiconductor devices 21, 24 of the step-down switch and the step-up switch for controlling the resistance in said connection 17.

An inductor 28 is arranged between the step-down switch 20 and the step-up switch 23 for both reducing peak currents from the IGBT 21 of the switch 20 and to act as current injector for stepping up the voltage 29 across the dissipative brake resistor 18.

The device has also a member 30 configured to measure the direct voltage of the direct voltage intermediate link 11 and send information thereabout to the control unit 26 as well as a member 31 configured to measure the intensity of the current (arrows 19) in the connection 17 and send information thereabout to the control unit 26. The control unit is preferably configured to control the switches 20 and 23 to vary the resistance of the connection 17 to obtain a substantially constant intensity of the current in said connection and by that of said braking torque during braking of the vehicle through the electric safety braking device.

It is shown in Fig 1 how the safety braking device may comprise a further resistor 32 connected in parallel with the step-up switch 23 and to the connection between the step-down switch and the step-up switch for reducing the required size of the inductor 28.

It is illustrated how the electric safety braking device may comprise a separate capacitor 33-35 connected to each electric terminal 14-16 of the electric machine 2 by a switching member 36-38.

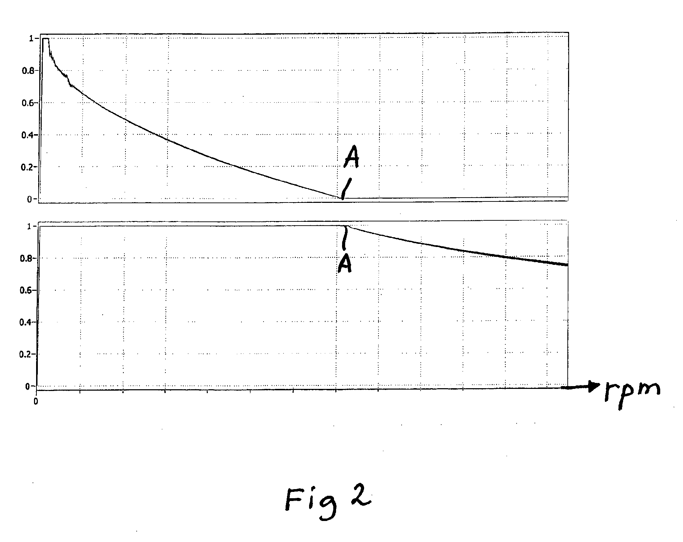

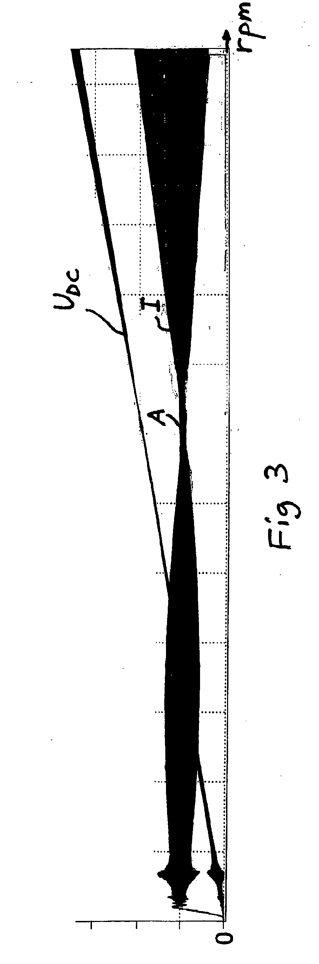

The operation of the electric safety braking device shown in Fig 1 will now be explained while making reference also to Fig 2 and Fig 3.

When there is a need of electric safety braking the electric energy will flow from the electric permanent magnet machine 2 into the DC link 11 through the rectifying diodes 7 of the converter 4 and according to the arrows 19 in the connection 17 to the combination of the step-down and step-up switches 20, 23. The purpose of these switches is to maintain a high constant resistive braking torque applied onto the machine 2 independently of the speed of the machine, i.e. of the vehicle. This may be accomplished by controlling the resistance in said connection 17 to gradually decrease for keeping the intensity of said current substantially constant and by that the braking torque substantially constant. When the semiconductor devices of the switches 20 and 23 are turned-off said resistance will be infinitely high, and the control unit 26 will upon receipt of a braking order given by the driver of the vehicle start a safety braking action by alternatively turning the IGBT of the step-down switch 20 on over an increasing part of the time for varying said resistance from infiniteness to be the same as the resistance of said at least one dissipative resistor 18, when the IGBT 21 is continuously turned on (point A in Fig 2 and Fig 3). The control unit 26 is further configured to start to turn the IGBT 24 of the step-up switch 23 on as of said instant A at which the IGBT 21 is continuously turned on and to turn the IGBT 24 on over an increasing part of time for decreasing said resistance and conducting an increasing part of the current through the IGBT 24 while increasing the by-passing of the dissipative resistor 18 and by that reducing said resistance towards theoretical zero, when also the IGBT 24 is continuously turned on. The current from the direct voltage intermediate link 11 may by proper control of the IGBT:s 21 and 24 through the control unit 26 be controlled to have a constant intensity during the braking procedure until the number of revolutions of the electric machine 2 and by that the speed of the vehicle is very low, perhaps less than 5 km/hour or even less than 3 km/hour. A small mechanical brake may then be used to stop the vehicle and holding the vehicle in a parking position.

Fig 2 illustrates at the top the duty cycle of the step-up switch and thereunder the duty cycle of the step-down switch versus the number of revolutions rpm of the machine 2, in which the duty cycle is 0.0 when a said switch is continuously turned-off and 1.0 when a switch is continuously turned on.

Fig 3 illustrates how the DC-link voltage U_{DC} decreases with a decreasing number of revolutions rpm during a safety braking action and how the current I in said connection may be kept substantially constant resulting in a substantially constant high resistive braking torque until the number of revolutions and by that the speed of the vehicle is low.

The braking torque may be further increased when carrying out electric safety braking by closing the switching members 36-38 and connecting the capacitors 33-35 to the terminals 14-16 of the machine 2.

The invention is of course not in any way restricted to the embodiment described above, but many possibilities to modifications thereof would be apparent to a person with ordinary skill in the art without departing from the scope of the invention as defined in the appended claims.

It is within the scope of the invention to obtain a variable resistance of said connection in other ways than illustrated. This may include switching in of resistors of different sizes.

The capacitors connectable to the terminals of the electric machine are optional as is the further resistor shown in Fig 1.

Other ways of obtaining appropriate control through the control unit than by information from the voltage and current measuring members shown in Fig 1 are also conceivable, such as information from a tachometer.

Furthermore, it is within the scope of the invention to provide the control unit with information about a possible slipping of wheels of the vehicle when braking for then controlling said resistance to increase for lowering said current and by that the braking torque to a suitable level.

It is within the scope of the invention to use the same dissipative brake resistor (-s) for the electric service brake and the electric safety brake.

Embodiments having no rectifying diode in the step-down switch and/or the step-up switch are conceivable.

## Claims

1. An electric safety braking device for an electric track-bound vehicle comprising
• an electric permanent magnet machine (2) configured to be connected to an electric power source (3) through a converter (4) configured to control said machine by Pulse Width Modulation for propulsion of the vehicle by power transmission to wheels thereof, and
• a resistive braking torque production assembly comprising a connection (17) of electric terminals (14-16) of the electric machine including at least one dissipative resistor (18), ***characterized* in that** said connection comprises a current path from said electric terminals through rectifying diodes (7) of said converter (4), that the device comprises means configured to vary the resistance of said connection and comprising a series connection, as seen in a path of said current from said machine (2) and said converter (4), of first a step-down switch (20) and then a step-up switch (23) with said at least one dissipative resistor (18) connected in parallel with the step-up switch, the device further comprising a control unit (26) separated from a converter control unit (8) configured to control said converter by Pulse Width Modulation, operable independently of the existence of a supply of electric power to said converter and the converter control unit and configured to control said means to keep said resistance infinitely high when not braking through said device and to accomplish braking through said device by varying this resistance to control the intensity of the current from the electric machine (2) through said diodes (7) of the converter through said connection (17) and by that the braking torque applied to said wheels through the device and that said means is controllable to vary the resistance of said connection down to a theoretical zero by enabling a bypassing of said at least one dissipative resistor (18) by said current.

2. A device according to claim 1, ***characterized* in that** it comprises an electric power source comprising at least one electric battery (27) configured to provide said control unit (26) of the device with electric power.

3. A device according to claim 1 or 2, ***characterized* in that** it comprises a member (30) configured to measure the direct voltage of a direct voltage intermediate link (11) of a said converter (4) and send information thereabout to said control unit (26), and that said control unit is configured to control said means to vary said resistance to obtain a substantially constant intensity of said current and by that of said braking torque during braking of the vehicle through the device.

4. A device according to any of the preceding claims, ***characterized* in that** it comprises a member (31) configured to measure the intensity of said current and send information thereabout to said control unit (26), and that the control unit is configured to control said means to vary said resistance to obtain a substantially constant intensity of said current and by that of said braking torque during braking of the vehicle through the device.

5. A device according to any of the preceding claims, ***characterized* in that** said step-down and step-up switches do each comprise at least one current valve having a semiconductor device (21, 24) of turn-off type, and that said control unit (26) is configured to control said semiconductor devices for varying said resistance of said connection (17).

6. A device according to claim 5, ***characterized* in that** said control unit (26) is configured to start a safety braking action by alternatively turning said semiconductor device (21) of the step-down switch (20) on over an increasing part of the time while keeping the semiconductor device (24) of the step-up switch (23) turned off for varying said resistance from infiniteness to be the same as the resistance of said at least one dissipative resistor (18).

7. A device according to claim 6, ***characterized* in that** said control unit (26) is configured to, during a safety braking action, start to turn the semiconductor device (24) of said step-up switch (23) on as of an instant at which the semiconductor device (21) of said step-down switch (20) is continuously turned-on and to keep this semiconductor device turned on over an increasing part of the time for decreasing said resistance and conducting an increasing part of said current therethrough while increasingly bypassing said at least one dissipative resistor (18).

8. A device according to any of the preceding claims, ***characterized* in that** it comprises a further resistor (32) connected in parallel with said step-up switch (23) and to the connection between the step-down switch (20) and the step-up switch.

9. A device according to any of the preceding claims, ***characterized* in that** it comprises a separate capacitor (33-35) connectable to each electric terminal (14-16) of said electric machine (2) by a switching member (36-38), and that said control unit (26) is configured to control these switching members to be open as long as said converter (4) and by that the electric machine is connected to an electric power source and these switching members to close when the electric power supply to the converter is interrupted and safety braking is to be carried out for increasing the braking torque obtained.

10. A device according to any of the preceding claims, ***characterized* in that** it is configured to be applied to an electric permanent magnet machine (2) having an electric braking device having current valves (9, 10) controlled through a converter control unit (8) to conduct current to at least one additional dissipative resistor (12, 13) for electric braking of the vehicle when said machine and converter are connected to an electric power supply, and that said control unit (26) is configured to occasionally during short period of times, such as in the order of 10 - 500 µs, control said means to decrease said resistance for checking the functionality of said means of the electric safety braking device.

11. A track-bound vehicle driving arrangement comprising an electric safety braking device according to any of claims 1-10.

12. A track-bound vehicle having an electric safety braking device according to any of claims 1-10.

13. A vehicle according to claim 12 having a separate said electric safety braking device for each wheel axle thereof.

## Patentansprüche

1. Elektrische Sicherheitsbremsvorrichtung für ein elektrisches Schienenfahrzeug, umfassend:
- eine elektrische Permanentmagnetmaschine (2), die zur Verbindung mit einer elektrischen Leistungsquelle (3) durch einen Gleichrichter/Wechselrichter (4) ausgestaltet ist, welcher ausgestaltet ist, um die Maschine durch eine Pulsbreitenmodulation zum Vortrieb des Fahrzeugs durch eine Leistungsübertragung an Räder desselben zu steuern, und
- eine resistive Anordnung zum Erzeugen von Bremsdrehmoment, die eine Verbindung (17) mit elektrischen Anschlüssen (14 - 16) der elektrischen Maschine umfasst, die mindestens einen dissipierenden Widerstand (18) enthält,
**dadurch gekennzeichnet, dass**
die Verbindung eine Stromstrecke von den elektrischen Anschlüssen durch Gleichrichtungsdioden (7) des Gleichrichters/Wechselrichters (4) hindurch umfasst, dass die Vorrichtung ein Mittel umfasst, das ausgestaltet ist, um den Widerstandswert der Verbindung zu verändern und das eine serielle Verbindung umfasst, die in einer Strecke des Stroms von der Maschine (2) und dem Gleichrichter/Wechselrichter (4), von einem ersten abwärts transformierenden Schalter (20) und dann einem aufwärts transformierenden Schalter (23) zu sehen ist, wobei der mindestens eine dissipierende Widerstand (18) mit dem aufwärts transformierenden Schalter parallel verbunden ist, wobei die Vorrichtung ferner eine Steuerungseinheit (26) umfasst, die von einer Gleichrichter/Wechselrichter-Steuerungseinheit (8), welche zur Steuerung des Gleichrichters/Wechselrichters durch Pulsbreitenmodulation ausgestaltet ist, getrennt ist, unabhängig von der Existenz der Zufuhr von elektrischer Leistung an den Gleichrichter/Wechselrichter und die Gleichrichter/Wechselrichter-Steuerungseinheit betrieben werden kann und ausgestaltet ist, um das Mittel so zu steuern, dass der Widerstandswert unendlich hoch gehalten wird, wenn nicht durch die Vorrichtung gebremst wird, und dass ein Bremsen durch die Vorrichtung bewerkstelligt wird, indem dieser Widerstandswert verändert wird, um die Intensität des Stroms von der elektrischen Maschine (2) durch die Dioden (7) des Gleichrichters/Wechselrichters durch die Verbindung (17) hindurch zu steuern und indem das Bremsmoment, das durch die Vorrichtung und durch das Mittel auf die Räder aufgebracht wird, steuerbar ist, um den Widerstandswert der Verbindung bis hinunter zu theoretisch Null zu verändern, indem ermöglicht wird, dass der Strom den mindestens einen dissipierenden Widerstand (18) umgeht.

2. Vorrichtung nach Anspruch 1,
**dadurch gekennzeichnet, dass** sie eine elektrische Leistungsquelle umfasst, die mindestens eine elektrische Batterie (27) umfasst, die ausgestaltet ist, um die Steuerungseinheit (26) der Vorrichtung mit elektrischer Leistung zu versorgen.

3. Vorrichtung nach Anspruch 1 oder 2,
**dadurch gekennzeichnet, dass** sie ein Element (30) umfasst, das ausgestaltet ist, um die Gleichspannung einer Gleichspannungs-Zwischenkopplung (11) des Gleichrichters/Wechselrichters (4) zu messen und um Informationen darüber an die Steuerungseinheit (26) zu senden, und dass die Steuerungseinheit ausgestaltet ist, um das Mittel zu steuern, um den Widerstandswert zu verändern, um eine im Wesentlichen konstante Intensität des Stroms und damit des Bremsmoments während eines Bremsens des Fahrzeugs durch die Vorrichtung zu erhalten.

4. Vorrichtung nach einem der vorstehenden Ansprüche,
**dadurch gekennzeichnet, dass** sie ein Element (31) umfasst, das ausgestaltet ist, um die Intensität des Stroms zu messen und um Informationen darüber an die Steuerungseinheit (26) zu senden, und dass die Steuerungseinheit ausgestaltet ist, um das Mittel zu steuern, um den Widerstandswert zu verändern, um eine im Wesentlichen konstante Intensität des Stroms und dadurch des Bremsmoments während eines Bremsens des Fahrzeugs durch die Vorrichtung zu erhalten.

5. Vorrichtung nach einem der vorstehenden Ansprüche,
**dadurch gekennzeichnet, dass** der abwärts transformierende und der aufwärts transformierende Schalter jeweils mindestens ein Stromventil mit einer Halbleitervorrichtung (21, 24) eines Ausschalt-Typs umfassen, und dass die Steuerungseinheit (26) ausgestaltet ist, um die Halbleitervorrichtungen zum Verstellen des Widerstandswerts der Verbindung (17) zu steuern.

6. Vorrichtung nach Anspruch 5,
**dadurch gekennzeichnet, dass** die Steuerungseinheit (26) ausgestaltet ist, um eine Sicherheitsbremsaktion zu starten, indem sie abwechselnd die Halbleitervorrichtung (21) des abwärts transformierenden Schalters (20) über einen zunehmenden Zeitanteil hinweg einschaltet, während sie die Halbleitervorrichtung (24) des aufwärts transformierenden Schalters (23) ausgeschaltet lässt, um den Widerstandswert von Unendlich so zu verändern, dass er gleich dem Widerstandswert des mindestens einen dissipierenden Widerstands (18) ist.

7. Vorrichtung nach Anspruch 6,
**dadurch gekennzeichnet, dass** die Steuerungseinheit (26) ausgestaltet ist, um während einer Sicherheitsbremsaktion zu beginnen, die Halbleitervorrichtung (24) des aufwärts transformierenden Schalters (23) von dem Augenblick an einzuschalten, bei dem die Halbleitervorrichtung (21) des abwärts transformierenden Schalters (20) kontinuierlich eingeschaltet ist, und um diese Halbleitervorrichtung über einen zunehmenden Zeitanteil hinweg eingeschaltet zu lassen, um den Widerstandswert zu verringern und einen zunehmenden Anteil des Stroms dort hindurchzuleiten, während der mindestens eine dissipierende Widerstand (18) in zunehmender Weise umgangen wird.

8. Vorrichtung nach einem der vorstehenden Ansprüche,
**dadurch gekennzeichnet, dass** sie einen weiteren Widerstand (32) umfasst, der zu dem aufwärts transformierenden Schalter (23) und zu der Verbindung zwischen dem abwärts transformierenden Schalter (20) und dem aufwärts transformierenden Schalter parallel verbunden ist.

9. Vorrichtung nach einem der vorstehenden Ansprüche,
**dadurch gekennzeichnet, dass** sie einen separaten Kondensator (33 - 35) umfasst, der mit jedem elektrischen Anschluss (14 - 16) der elektrischen Maschine (2) durch ein Schaltelement (36 - 38) verbunden werden kann, und dass die Steuerungseinheit (26) ausgestaltet ist, um diese Schaltelemente so zu steuern, dass sie geöffnet sind, solange der Gleichrichter/Wechselrichter (4) und damit die elektrische Maschine mit einer elektrischen Leistungsquelle verbunden ist, und dass diese Schaltelemente geschlossen werden, wenn die elektrische Leistungsversorgung an den Gleichrichter/Wechselrichter unterbrochen ist und ein Sicherheitsbremsen ausgeführt werden muss, um das erhaltene Bremsmoment zu erhöhen.

10. Vorrichtung nach einem der vorstehenden Ansprüche,
**dadurch gekennzeichnet, dass**
sie zur Anwendung mit einer elektrischen Permanentmagnetmaschine (2) ausgestaltet ist, die eine elektrische Bremsvorrichtung aufweist, die Stromventile (9, 10) aufweist, die durch eine Gleichrichter/Wechselrichter-Steuerungseinheit (8) gesteuert werden, um Strom an mindestens einen zusätzlichen dissipierenden Widerstand (12, 13) zum elektrischen Bremsen des Fahrzeugs zu leiten, wenn die Maschine und der Gleichrichter/Wechselrichter mit einer elektrischen Leistungsversorgung verbunden sind, und dass die Steuerungseinheit (26) ausgestaltet ist, um gelegentlich während kurzer Zeitspannen, etwa in der Größenordnung von 10 - 500 µs, das Mittel so zu steuern, dass der Widerstandswert verringert wird, um die Funktionalität des Mittels der elektrischen Sicherheitsbremsvorrichtung zu überprüfen.

11. Schienenfahrzeugantriebsanordnung, die eine elektrische Sicherheitsbremsvorrichtung gemäß beliebigen der Ansprüche 1 - 10 umfasst.

12. Schienenfahrzeug mit einer elektrischen Sicherheitsbremsvorrichtung gemäß beliebigen der Ansprüche 1 - 10.

13. Fahrzeug nach Anspruch 12, das für jede seiner Radachsen eine separate dieser elektrischen Sicherheitsbremsvorrichtungen aufweist.

## Revendications

1. Dispositif électrique de freinage de sécurité pour un véhicule électrique sur rails comprenant :
une machine électrique à aimants permanents (2) configurée pour être connectée à une source de puissance électrique (3) par l'intermédiaire d'un convertisseur (4) configuré pour commander ladite machine par modulation de durée d'impulsion pour la propulsion du véhicule par la transmission de puissance aux roues de celui-ci, et
un ensemble de production de couple de freinage résistif comprenant une connexion (17) des bornes électriques (14 à 16) de la machine électrique comprenant au moins une résistance de dissipation (18),
**caractérisé en ce que** ladite connexion comprend un trajet de courant à partir desdites bornes électriques à travers les diodes de redressement (7) dudit convertisseur (4), **en ce que** le dispositif comprend des moyens configurés pour modifier la résistance de ladite connexion et comprenant une connexion série, telle que vue dans un trajet dudit courant à partir de ladite machine (2) et dudit convertisseur (4), d'un premier commutateur abaisseur (20) et ensuite d'un commutateur élévateur (23) avec ladite au moins une résistance de dissipation (18) connectée en parallèle avec le commutateur élévateur, le dispositif comprenant en outre une unité de commande (26) séparée d'une unité de commande de convertisseur (8) configurée pour commander ledit convertisseur par modulation de durée d'impulsion, pouvant être utilisée indépendamment de l'existence de la fourniture d'une puissance électrique au dit convertisseur et à l'unité de commande de convertisseur et configurée pour commander lesdits moyens pour maintenir ladite résistance à une valeur infiniment grande en l'absence de freinage par ledit dispositif et pour effectuer un freinage par ledit dispositif en modifiant cette résistance pour commander l'intensité du courant provenant de la machine électrique (2) à travers lesdites diodes (7) du convertisseur par l'intermédiaire de ladite connexion (17) et de ce fait le couple de freinage appliqué aux dites roues par l'intermédiaire du dispositif, et **en ce que** lesdits moyens peuvent être commandés pour modifier la résistance de ladite connexion jusqu'à un zéro théorique en permettant que ledit courant contourne ladite au moins une résistance de dissipation (18).

2. Dispositif selon la revendication 1, **caractérisé en ce qu'**il comprend une source de puissance électrique comprenant au moins une batterie électrique (27) configurée pour fournir une puissance électrique à ladite unité de commande (26) du dispositif.

3. Dispositif selon la revendication 1 ou 2, **caractérisé en ce qu'**il comprend un élément (30) configuré pour mesurer la tension continue d'une liaison intermédiaire de tension continue (11) d'un dit convertisseur (4) et envoyer des informations concernant celle-ci à ladite unité de commande (26), et **en ce que** ladite unité de commande est configurée pour commander lesdits moyens pour modifier ladite résistance pour obtenir une intensité sensiblement constante dudit courant et de ce fait dudit couple de freinage pendant le freinage du véhicule par le dispositif.

4. Dispositif selon l'une quelconque des revendications précédentes, **caractérisé en ce qu'**il comprend un élément (31) configuré pour mesurer l'intensité dudit courant et envoyer des informations concernant celle-ci à ladite unité de commande (26), et **en ce que** l'unité de commande est configurée pour commander lesdits moyens pour modifier ladite résistance pour obtenir une intensité sensiblement constante dudit courant et de ce fait dudit couple de freinage pendant le freinage du véhicule par le dispositif.

5. Dispositif selon l'une quelconque des revendications précédentes, **caractérisé en ce que** lesdits commutateurs abaisseur et élévateur comprennent chacun au moins une vanne de courant comportant un dispositif à semi-conducteurs (21, 24) du type à blocage, et **en ce que** ladite unité de commande (26) est configurée pour commander lesdits dispositifs à semi-conducteurs pour modifier ladite résistance de ladite connexion (17).

6. Dispositif selon la revendication 5, **caractérisé en ce que** ladite unité de commande (26) est configurée pour débuter une action de freinage de sécurité en, alternativement, mettant à l'état passant ledit dispositif à semi-conducteurs (21) du commutateur abaisseur (20) pendant une partie croissante du temps tout en maintenant le dispositif à semi-conducteurs (24) du commutateur élévateur (23) bloqué pour modifier ladite résistance à partir de l'infini pour qu'elle devienne identique à la résistance de ladite au moins une résistance de dissipation (18).

7. Dispositif selon la revendication 6, **caractérisé en ce que** ladite unité de commande (26) est configurée pour, pendant une action de freinage de sécurité, commencer à mettre à l'état passant le dispositif à semi-conducteurs (24) dudit commutateur élévateur (23) à partir d'un instant auquel le dispositif à semi-conducteurs (21) dudit commutateur abaisseur (20) est mis continûment à l'état passant et pour maintenir ce dispositif à semi-conducteurs à l'état passant pendant une partie croissante du temps pour diminuer ladite résistance et conduire une partie croissante dudit courant à travers celui-ci tout en contournant de manière croissante ladite au moins une résistance de dissipation (18).

8. Dispositif selon l'une quelconque des revendications précédentes, **caractérisé en ce qu'**il comprend une résistance (32) supplémentaire connectée en parallèle avec ledit commutateur élévateur (23) et à la connexion entre le commutateur abaisseur (20) et le commutateur élévateur.

9. Dispositif selon l'une quelconque des revendications précédentes, **caractérisé en ce qu'**il comprend un condensateur séparé (33 à 35) pouvant être connecté à chaque borne électrique (14 à 16) de ladite machine électrique (2) par un élément de commutation (36 à 38), et **en ce que** ladite unité de commande (26) est configurée pour commander ces éléments de commutation pour qu'ils soient ouverts tant que ledit convertisseur (4) et de ce fait la machine électrique sont connectés à une source de puissance électrique et commander ces éléments de commutation pour qu'ils se ferment lorsque la fourniture de puissance électrique au convertisseur est interrompue et qu'un freinage de sécurité doit être effectué pour augmenter le couple de freinage obtenu.

10. Dispositif selon l'une quelconque des revendications précédentes, **caractérisé en ce qu'**il est configuré pour être appliqué à une machine électrique à aimants permanents (2) comportant un dispositif de freinage électrique comportant des vannes de courant (9, 10) commandées par l'intermédiaire de l'unité de commande de convertisseur (8) pour conduire un courant vers au moins une résistance de dissipation (12, 13) supplémentaire pour le freinage électrique du véhicule lorsque ladite machine et ledit convertisseur sont connectés à une alimentation électrique, et **en ce que** ladite unité de commande (26) est configurée pour commander, à l'occasion pendant de courtes périodes de temps, telles que de l'ordre de 10 à 500 µs, lesdits moyens pour diminuer ladite résistance pour vérifier la fonctionnalité desdits moyens du dispositif électrique de freinage de sécurité.

11. Agencement d'entraînement de véhicule sur rails comprenant un dispositif électrique de freinage de sécurité selon l'une quelconque des revendications 1 à 10.

12. Véhicule sur rails comportant un dispositif électrique de freinage de sécurité selon l'une quelconque des revendications 1 à 10.

13. Véhicule selon la revendication 12, comportant un dit dispositif électrique de freinage de sécurité séparé pour chaque essieu de roue de celui-ci.
